# NOUVEAU FASCICULE DE BREVET EUROPEEN

(11) **EP 0 674 040 B2**
(45) Date de publication et mention de la décision concernant l'opposition: **26.10.2005**
(45) Mention de la délivrance du brevet: 31.05.2000
(21) Numéro de dépôt: 95400499.0
(22) Date de dépôt: 08.03.1995
(51) Int. Cl.: D21B 1/32, D21F 1/70

(54) **Procédé de désencrage de pâte à papier et appareil pour la mise en oeuvre de ce procédé**
Verfahren zum de-inken von Papierzellstoff und Vorrichtung zur Durchführung des Verfahrens
Process for de-inking paper pulp and apparatus for the application of the process

(30) Priorité: 11.03.1994 FR 9402886
(43) Date de publication de la demande: 27.09.1995
(73) Titulaire: E & M LAMORT, F-51300 Vitry le François (FR)
(72) Inventeur: Serres, Alain, F-51100 Reims (FR)
(74) Mandataire: Rhein, Alain

(56) Documents cités:
- EP-A- 0 198 737
- WO-A-80/00423
- WO-A-93/04784
- DE-A- 2 712 944
- DE-A- 3 524 071
- DE-A- 4 204 915

## Description

La présente invention a pour objet un procédé de désencrage de pâte à papier et des appareils pour la mise en oeuvre de ce procédé.

La présente invention concerne plus particulièrement le désencrage de la pâte à papier provenant de vieux papiers que l'on veut ré-utiliser.

Lorsque l'on veut ré-utiliser des vieux papiers ils sont tout d'abord mis à l'état de pâte au moyen d'un appareil appelé communément pulpeur et cette pâte est ensuite débarrassée de ses divers corps étrangers, appelés contaminants, en la faisant passer à travers des tamis. Cependant après cette élimination des contaminants la pâte contient des particules d'encre qu'il faut éliminer si on veut avec cette pâte faire du papier de qualité.

Pour cela il est connu d'insuffler de l'air dans la pâte au moyen d'injecteurs de façon à créer des bulles; on voit alors apparaître au-dessus de la masse de pâte à papier une mousse faite de milliers de bulles sur les parois desquelles se sont fixées les particules d'encre.

De nombreux appareils d'injection d'air pour réaliser un tel désencrage ont été décrits notamment dans la demande de brevet EP 0 305 251 au nom de la demanderesse et dans le brevet allemand DE 35 24 071.

Dans le brevet européen EP 0 122 747 on a décrit un appareil de désencrage dans lequel on injecte de l'air dans une canalisation traversée par un flux de pâte qui débouche ensuite à la base d'un récipient de telle sorte que les bulles s'élèvent à travers la masse de pâte pour former un tapis de mousse à la surface de la pâte, cette mousse étant ensuite aspirée.

Dans le brevet allemand DE 35 24 071 on a décrit un appareil de désencrage constitué par une enceinte au niveau supérieur de laquelle on introduit la pâte à papier à désencrer, cette pâte à papier circulant en spirale du haut de l'enceinte vers le bas, une portion de cette masse de pâte à papier étant prélevée dans l'enceinte, puis additionnée d'air et ré-injectée à la base et au centre de l'enceinte.

Les travaux de la demanderesse ont permis de découvrir que l'efficacité du désencrage d'une pâte au moyen de bulles d'air était considérablement améliorée si on augmente les probabilités de collision des bulles avec les particules d'encre et leur durée de passage à travers la pâte.

Or, les dispositifs décrits plus haut ne donnent pas satisfaction à ce point de vue parce qu'ils sont conçus d'une façon telle que les probabilités de collision des bulles avec les particules d'encre et leur durée de passage à travers la pâte sont insuffisantes.

Le procédé de désencrage de pâte à papier selon l'invention est défini selon la revendication 1.

Ce procédé peut avantageusement comporter les dispositions suivantes :
- des bulles sont crées dans un circuit recyclé sur lui-même, situé sous l'étage de recyclage le plus bas,
- on introduit dans ledit circuit recyclé sur lui-même et situé sous l'étage de recyclage le plus bas la quantité d'eau nécessaire pour compenser l'eau évacuée avec la mousse,
- on dispose une pluralité de circuits de recyclage, distincts les uns des autres, chaque circuit de recyclage comportant une entrée dans l'enceinte, une sortie qui lui correspond et une pompe de circulation, les entrées étant situées les unes au-dessus des autres en partant de la zone supérieure de l'enceinte, chaque entrée dans l'enceinte d'un circuit de recyclage se faisant à un niveau inférieur à celui de l'entrée du circuit précédent,
- les bulles sont créées dans un circuit recyclé sur lui-même, situé à la base de la masse de pâte à papier à désencrer, les autres recyclages de la pâte se faisant au choix avec ou sans introduction d'air,
- des bulles sont créées à la base de la masse de pâte à papier à désencrer par insufflation d'air comprimé,
- on introduit la quantité de liquide pour compenser l'eau évacuée avec la mousse à un niveau situé au-dessus de la zone où l'air est insufflé
- le liquide introduit en complément est additionné d'un additif chimique favorisant la formation des bulles et l'adhérence des particules d'encre aux parois desdites bulles,
- les bulles sont introduites sous forme de mousse par un orifice situé en-dessous de la pâte à papier ; les différentes étapes de recyclage de la pâte se faisant éventuellement sans introduction d'air ; la mousse comportant éventuellement des produits chimiques favorisant la formation de la mousse et l'adhérence des particules d'encre aux parois des bulles de la mousse,
- la pâte à papier à désencrer est additionnée d'un additif chimique favorisant l'élimination des particules d'encre.

L'invention concerne également un appareil pour la mise en oeuvre du procédé défini selon la revendication 11 ou 12.

Cet appareil peut également comporter les dispositions suivantes :
- il comprend une enceinte munie d'une pluralité d'orifices d'entrée, d'une pluralité d'orifices de sortie correspondant auxdits orifices d'entrée ; ainsi qu'une pluralité de circuits de recyclage munis chacun d'une pompe, aucun de ces circuits de recyclage ne comportant d'injecteur d'air : l'orifice situé le plus haut étant celui par lequel arrive la pâte à traiter et l'orifice de sortie situé le plus bas étant celui par lequel la pâte est évacuée hors de l'enceinte ; chaque orifice de sortie des étages successifs de recyclage étant relié par des conduites à l'orifice d'entrée qui est situé immédiatement en dessous de l'orifice d'entrée précédent ; l'enceinte étant munie en plus à sa base d'un circuit de recyclage d'eau ou de liquide approprié comportant une sortie reliée par une canalisation, munie d'un injecteur d'air, à un orifice d'entrée situé à un niveau inférieur au plus bas des circuits de recyclage de la pâte et au-dessus de la sortie dudit circuit de recyclage, de telle sorte que les bulles ne sont générées que dans le circuit de recyclage situé au-dessous du ou des circuits de recyclage de la pâte,
- le circuit inférieur de recyclage de liquide dans lequel sont créées les bulles est remplacé par un orifice par lequel est introduite directement la mousse,
- le circuit inférieur de recyclage de liquide est remplacé par un orifice par lequel est introduit de l'air comprimé, l'enceinte comportant une grille située au-dessus dudit orifice de façon à former des bulles qui se répartissent dans toute la masse de pâte à papier,
- il comporte une conduite d'arrivée d'eau débouchant dans l'enceinte à un niveau situé au-dessus de la grille de répartition des bulles,
- des déflecteurs sont disposés entre les entrées de la pâte et les sorties de pâte correspondantes,
- chaque déflecteur comporte une partie verticale cylindrique faisant face à l'orifice d'entrée et une partie oblique conique conduisant à l'orifice de sortie correspondant de façon que le flux allant de l'un à l'autre s'élève pour passer au-dessus de la partie verticale pour descendre ensuite vers l'orifice de sortie, les bulles passant d'un étage à l'autre dans l'espace ménagé entre les parties verticales des déflecteurs et la paroi interne de l'enceinte,
- des chicanes sont disposées dans ledit espace situé entre la paroi verticale des déflecteurs et la paroi interne de l'enceinte,
- les chicanes sont constituées par une paroi plane, perpendiculaire à l'axe vertical de l'enceinte, qui s'enroule en spirale entre la paroi interne de l'enceinte et la paroi verticale du déflecteur correspondant, cette paroi s'élevant depuis la partie basse de chaque orifice d'entrée jusqu'à sa partie haute en plusieurs tronçons disposés en gradins, lesdits tronçons étant décalés en hauteur de façon à ménager des fentes par lesquelles passent les bulles,
- l'enceinte est cylindrique, les déflecteurs sont constitués par des dispositifs annulaires qui comportent une paroi verticale cylindrique et un fond traversé par une colonne centrale tubulaire,
- les dispositifs annulaires ont un fond conique en forme d'entonnoir, à l'exception du dispositif annulaire inférieur qui a un fond plat,
- à la base du fond de chaque dispositif annulaire est disposée une fenêtre ménagée dans la colonne centrale et communiquant avec un tube d'évacuation placé à l'intérieur de ladite colonne,
- chaque fenêtre d'évacuation est coiffée par un capot conique, muni d'ouvertures,
- les tubes par lesquels la pâte est évacuée de l'enceinte pour être recyclée sont disposés à l'intérieur de la colonne centrale.

De préférence la masse de pâte à papier est mise en circulation de façon à se déplacer verticalement de haut en bas tandis que les bulles d'air sont introduites dans la partie basse de la masse de pâte de façon à la traverser de bas en haut.

La présente invention concerne également des appareils pour la mise en oeuvre de ce procédé dans lesquels sont mises en oeuvre ces deux circulations en sens inverse avec des moyens de recyclage.

A titre d'exemple non limitatif on a représenté aux dessins annexés :

figure 1 : une vue illustrant de façon schématique un premier appareil pour la mise en oeuvre du procédé selon l'invention.

figure 2 : une vue illustrant de façon schématique un deuxième appareil pour la mise en oeuvre du procédé selon l'invention.

figure 3 : une vue illustrant de façon schématique un troisième appareil pour la mise en oeuvre du procédé selon l'invention.

figure 4 : une vue illustrant de façon schématique un mode de réalisation des déflecteurs d'un appareil selon l'invention vu en coupe selon C-C des figures 5 et 6.

figure 5 : une vue en plan et en coupe selon A-A de la figure 4.

figure 6 : une vue en plan et en coupe selon B-B de la figure 4.

figure 7 : une vue schématique en développé illustrant la chicane de la figure 5.

figure 8 : une vue schématique en développé illustrant la chicane de la figure 6.

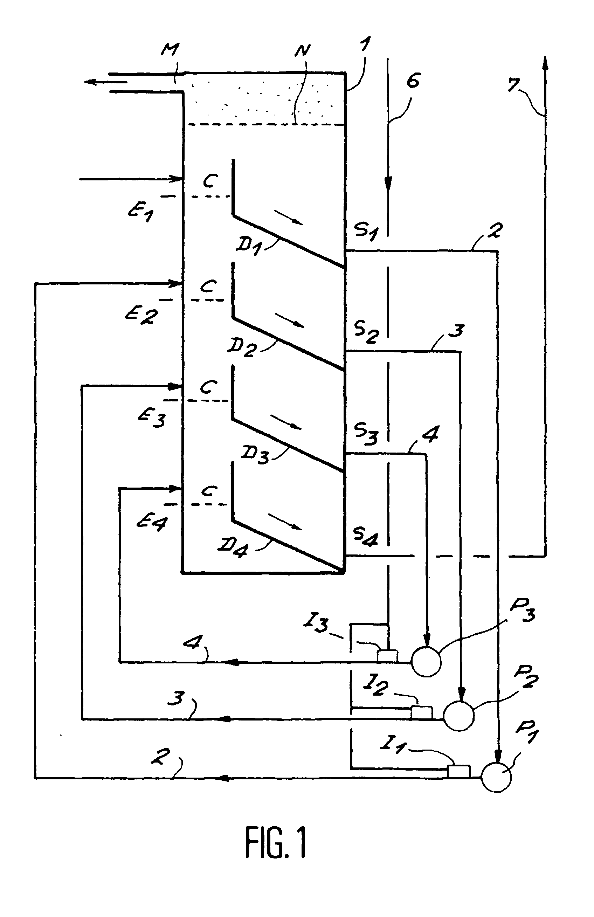

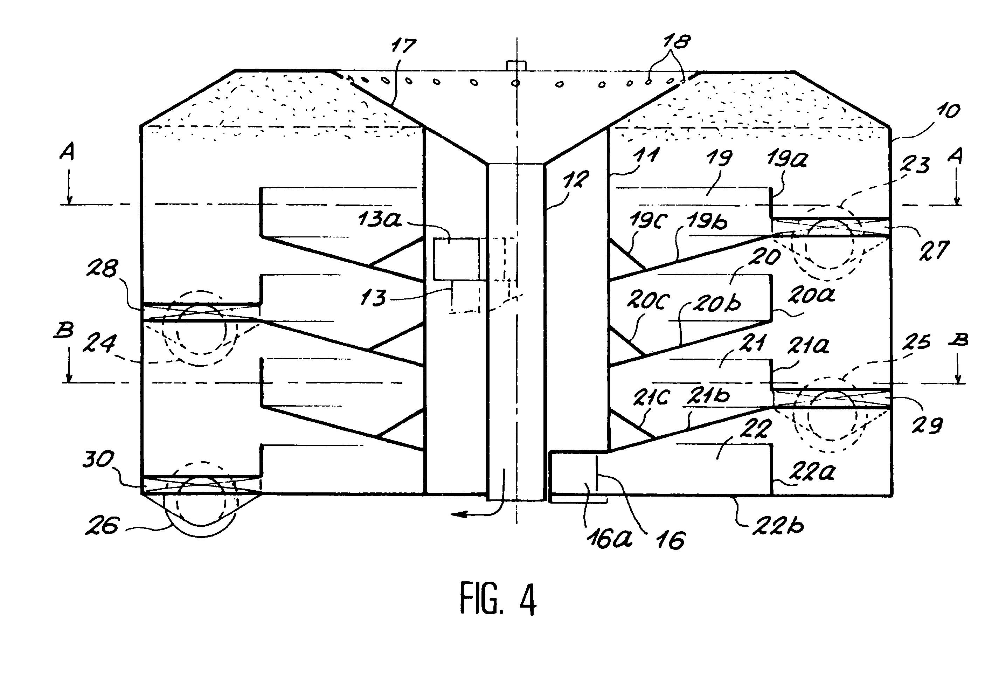

Les figures 1 à 3 sont des vues schématiques. Sur ces figures l'enceinte 1 est représentée comme étant un parallélépipède de section rectangulaire, muni d'une pluralité de déflecteurs D, quatre (D₁, D₂, D₃, D₄) dans l'exemple représenté qui comporte une partie verticale et une partie horizontale. Cette représentation schématique a pour but de mieux faire comprendre le principe de fonctionnement de l'invention; mais comme cela est illustré aux figures 4, 5, 6 et 7, l'enceinte 1 est de préférence un cylindre de révolution, les parois verticales des déflecteurs sont des cylindres de révolution et les parois obliques des surfaces coniques.

En se reportant à la figure 1 on voit que, selon un premier mode de réalisation, l'appareil est constitué par une enceinte 1, disposée verticalement comportant depuis le haut vers le bas quatre orifices d'entrée E portant les références E₁, E₂, E₃, E₄ ainsi que quatre orifices de sortie S référencés S₁, S₂, S₃ et S₄

L'orifice d'entrée E₁ qui est au niveau le plus élevé est celui par lequel arrive la pâte qui doit être désencrée.

A chaque orifice d'entrée tel que E₁ par exemple, correspond un orifice de sortie S₁ de sorte que la majeure partie (voire même la totalité) du flux arrivant dans l'enceinte en E₁ en ressorte en S₁. La sortie S₁ est reliée à l'entrée E₂ qui est située en-dessous du niveau de l'orifice E₁ afin que le produit, qui est ainsi recyclé, le soit à un niveau inférieur.

Dans les exemples représentés les orifices de sortie S₁, S₂, S₃, S₄ sont situés à un niveau inférieur à celui de l'orifice d'entrée E₁, E₂, E₃, E₄ auxquels ils correspondent, mais cela n'est pas impératif.

Dans ces exemples, le deuxième orifice d'entrée E₂ est disposé légèrement plus bas que le premier orifice de sortie S₁ ; le troisième orifice d'entrée E₃ est disposé légèrement plus bas que le deuxième orifice de sortie S₂; le quatrième orifice d'entrée E₄ est disposé légèrement plus bas que le troisième orifice de sortie S₃; le quatrième orifice de sortie S₄ est situé à la partie basse de l'enceinte 1.

L'orifice S₄ est celui par lequel la pâte, débarrassée de son encre, est évacuée.

A sa partie supérieure l'enceinte 1 comporte un ou plusieurs orifices M destiné à l'évacuation de la mousse.

L'orifice de sortie S₁ est relié à l'orifice d'entrée E₂ au moyen d'une canalisation 2 sur laquelle est disposée une pompe P₁. De façon analogue l'orifice de sortie S₂ est relié par une canalisation 3 à l'orifice E₃ avec interposition d'une pompe P₂ et l'orifice S₃ à l'orifice E₄ avec une pompe P₃.

Le fonctionnement est décrit ci-après.

La pâte est amenée par E₁ (par tout moyen approprié) dans l'enceinte 1 qui est remplie jusqu'au niveau N qui est situé au-dessus de l'orifice E₁ et en-dessous de la canalisation M d'évacuation de la mousse.

Lorsque le niveau est atteint les pompes de recyclage P₁, P₂ et P₃ sont mises en action.

La pâte arrivant par E₁ est évacuée en tout ou partie par l'orifice S₁, la canalisation 2 permet de ré-introduire la pâte dans l'enceinte par l'orifice E₂.

La pâte ré-introduite en E₂ est évacuée, en tout ou partie, par l'orifice S₂ et ré-introduite en E₃; puis de E₃ elle sort par S₃ pour être ré-introduite en E₄ ; et de E₄ elle va jusqu'à la sortie S₄ où elle est évacuée par la canalisation 7.

De préférence, à la pompe P₃ qui est celle par laquelle la pâte est recyclée au point le plus bas de l'enceinte 1, est associé un injecteur d'air I₃ alimenté par une conduite d'air 6. Il en résulte que le flux de pâte qui arrive en E₄, qui est l'orifice d'entrée le plus bas de l'enceinte, est chargé de bulles d'air. Ces bulles d'air vont remonter de sorte que la pâte recyclée en S₃, S₂ et S₁ est re-mélangée aux bulles et donc que les bulles qui finissent par arriver au niveau M ont été mélangées à la pâte, ont été agitées dans la pâte à plusieurs reprises et que les probabilités de collisions entre elles et les particules d'encre ont été augmentées.

On peut disposer des injecteurs d'air supplémentaires I₂ et I₁ en association avec les pompes P₂ et P₁, ce qui augmente la quantité de bulles qui remontent à travers la masse de pâte qui descend.

Dans l'exemple représenté il y a trois circuits de recyclage S₁-E₂, S₂-E₃, S₃-E₄ mais il est bien évident que l'invention n'est pas limitée à ce cas particulier.

Il peut n'y en avoir qu'un seul, comme il peut y avoir plus de trois.

On peut également disposer à l'intérieur de l'enceinte 1 des moyens de guidage des courants de recyclage.

Comme on le voit à la figure 1 on peut disposer entre chaque entrée E et chaque sortie S un déflecteur D; soit un déflecteur D₁ entre E₁ et S₁ ; D₂ entre E₂ et S₂; D₃ entre E₃ et S₃ et D₄ entre E₄ et S₄; les orifices de sortie S₁, S₂, S₃, S₄ étant chacun situé à un niveau inférieur à celui de l'orifice d'entrée E₁, E₂, E₃, E₄

De préférence, comme cela est représenté, chaque déflecteur D comporte une paroi verticale qui fait face à l'orifice d'entrée E et une paroi inclinée qui se dirige vers l'orifice de sortie S.

De plus, entre la partie verticale du déflecteur D et la paroi interne de l'enceinte 1 sont disposées des chicanes C qui ont pour fonction de laisser passer les bulles vers le haut sans laisser passer la pâte vers le bas.

Ainsi, le flux qui arrive par chaque orifice d'entrée E ne peut pas passer ou bien difficilement à travers les chicanes C, et doit contourner l'obstacle constitué par la partie verticale de D et redescendre le long de la paroi inclinée jusqu'à l'orifice de sortie correspondant.

Grâce à ces déflecteurs ce n'est que progressivement, par recyclages successifs, que la masse de pâte descend de haut en bas de l'enceinte 1.

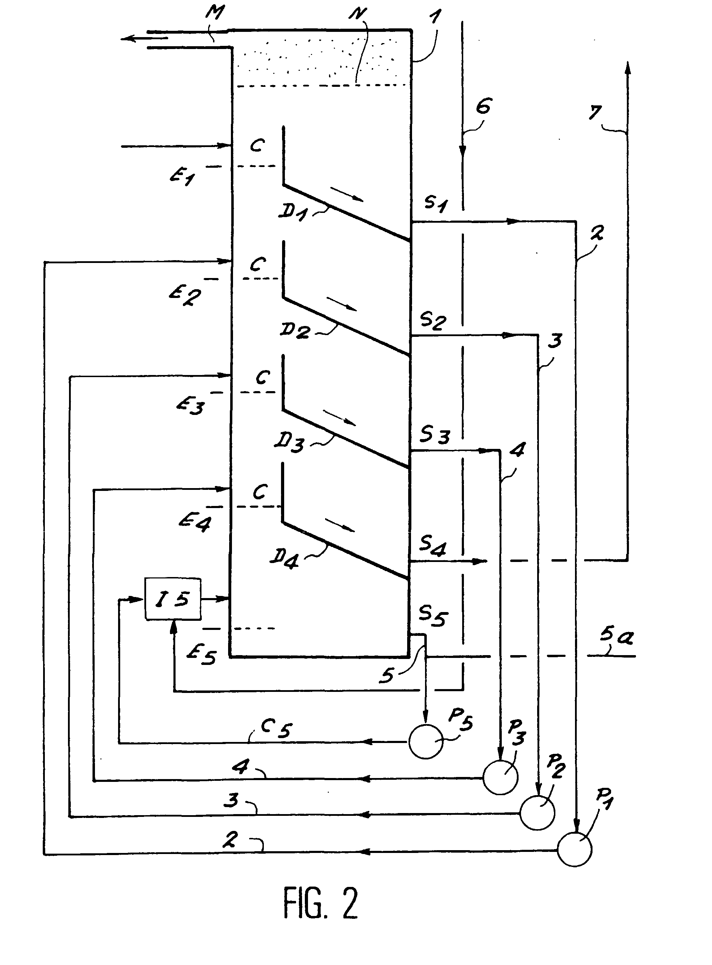

La figure 2 représente un deuxième mode de réalisation dans lequel les constituants identiques portent les mêmes références.

La différence entre les deux modes de réalisation provient de ce qu'il n'y a plus qu'un seul injecteur d'air I₄ qui est associé avec un circuit particulier de recyclage 5 qui comporte une pompe P₄.

Ce circuit 5 a ceci de particulier qu'il est destiné à ne recycler que de l'eau. Cette eau est introduite, à la demande, par une canalisation 5a.

En effet une certaine quantité d'eau est inévitablement entraînée avec la mousse de sorte qu'il est nécessaire de rajouter un peu d'eau. De plus, au démarrage, il est nécessaire de remplir d'eau le fond de l'enceinte 1 : cette eau est donc introduite à la demande. Elle arrive dans l'enceinte 1 par un orifice additionnel E₅ situé en dessous de E₄ et ressort par un orifice de sortie S₅ situé en-dessous de S₄. Cette eau circule donc en circuit fermé S₅, 5, P₅, 5, I₅ et E₅, pratiquement sans se mélanger à la pâte. Elle reçoit une insufflation d'air au moyen de l'injecteur I₅ et les bulles montent verticalement dans le passage ménagé entre les parois verticales des déflecteurs D et la paroi intérieure de l'enceinte 1.

Il est possible alors d'ajouter à l'eau passant à travers l'injecteur I₅ un additif chimique destiné à favoriser la formation des bulles et l'adhérence des particules d'encre sur leurs parois. On peut également, au lieu d'eau, employer tout autre liquide approprié dans lequel on crée des bulles, qui vont s'élever dans la pâte située au-dessus. On peut même, selon une variante non représentée, introduire en E₅ une mousse sans qu'il soit nécessaire d'employer un liquide dans lequel on crée des bulles.

Dans ce cas l'injection d'air ne se faisant que dans un circuit d'eau cela élimine le risque de bouchage des injecteurs ; on peut donc employer des tuyères d'injection d'air de plus petit diamètre et l'introduction de la pâte dans l'enceinte 1 se fait de façon plus simple sans injecteur.

De plus, comme la concentration de la pâte n'a plus d'effet sur la formation des bulles on obtient une plus grande quantité de bulles pour un même volume et on peut donc utiliser des enceintes de désencrage plus petites.

Il est également possible d'ajouter à la pâte un autre additif chimique destiné à favoriser l'élimination des particules d'encre.

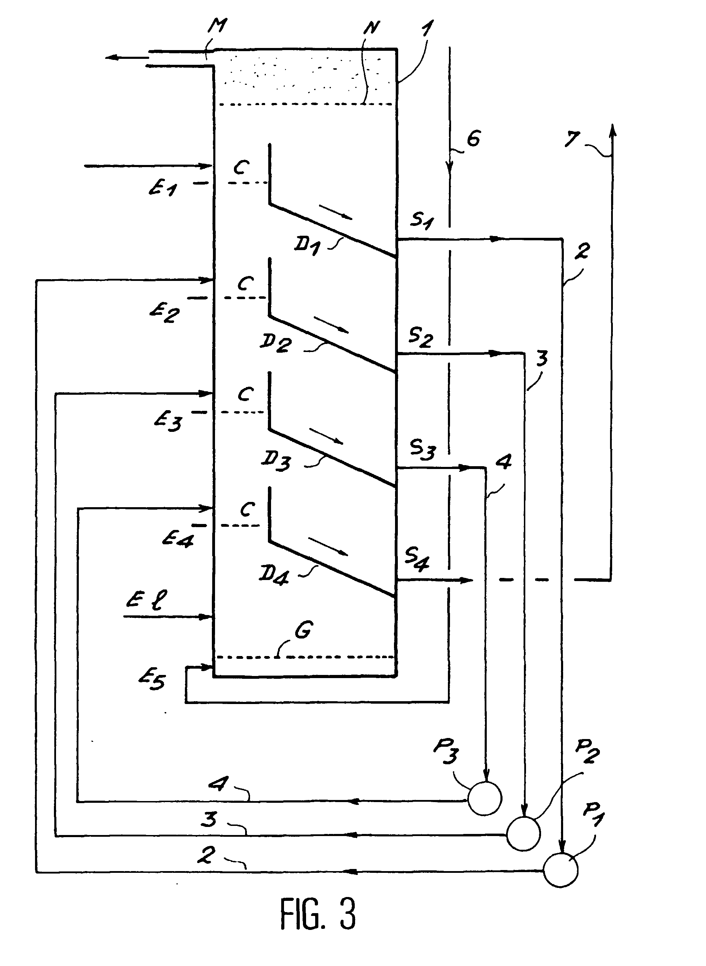

La figure 3 représente une variante de réalisation de la figure 2. Dans cette variante les circuits de recyclages 2,3,4 (avec les pompes P₁, P₂, P₃) ne comportent aucun moyen d'injection d'air, comme c'est le cas dans l'appareil de la figure 2 et l'air n'étant introduit qu'à la base de l'enceinte 1. Mais dans le cas de la figure 3 il n'y a pas à la base de l'enceinte un circuit de recyclage d'eau avec introduction d'air. Dans ce cas l'air, amené par la canalisation 6, est injecté directement à la base de l'enceinte 1, par l'orifice E₅.

De plus afin d'avoir une meilleure répartition des bulles on dispose à un niveau supérieur à celui de l'arrivée d'air E₅ une grille G munie d'une multiplicité d'orifices.

L'eau nécessaire pour compenser la quantité d'eau évacuée avec la mousse est introduite par l'orifice El situé au-dessus de la grille G.

Bien évidemment, comme dans le cas de la figure 2 on peut ajouter à cette eau un produit chimique qui favorise la formation des bulles.

Les figures 1 à 3 sont des représentations schématiques ; tandis que les figures 4 à 8 sont relatives à un mode de réalisation de l'invention.

En se reportant à ces figures on voit que l'appareil est constitué par une enceinte cylindrique 10 comportant une colonne tubulaire centrale 11 à l'intérieur de laquelle sont disposés d'une part un tube central 12 et quatre tubes 13,14,15,16. Les deux tubes 11 et 12 qui sont concentriques, sont surmontés par un cône 17 dont la partie supérieure est munie d'une couronne de trous ou passages 18.

Autour de la colonne centrale 11 sont disposés les uns au-dessus des autres quatre dispositifs annulaires 19, 20, 21 et 22 qui correspondent aux déflecteurs D des figures 1 à 3.

De préférence, ces dispositifs annulaires comportent une paroi verticale 19a, 20a, 21a, 22a, et un fond conique 19b, 20b, 21 b, le fond 22b du dispositif le plus bas étant plat et posé sur le fond de l'enceinte 1.

A chaque dispositif annulaire 19 à 22 correspond un orifice d'entrée 23 à 26.

La colonne centrale 11 est percée à la base de chaque dispositif annulaire d'une fenêtre 13a, 14a, 15a, 16a, qui communique chacune avec un des tubes 13, 14, 15, 16.

Pour simplifier la figure 4 on n'a représenté que deux fenêtres 13a et 16a et le tube 13 n'est que partiellement représenté.

Les orifices d'entrée 23 à 26 correspondent aux entrées E₁ à E₄ des figures 1 à 3; les fenêtres 13a à 16a correspondent aux sorties S₁ à S₄; les circuits de recyclages avec leurs pompes ne sont pas représentés.

Sur la figure 4 on voit que la base des parties coniques 19b, 20b et 21 b est coiffée par un capot 19c, 20c et 21c, de forme conique irrégulière.

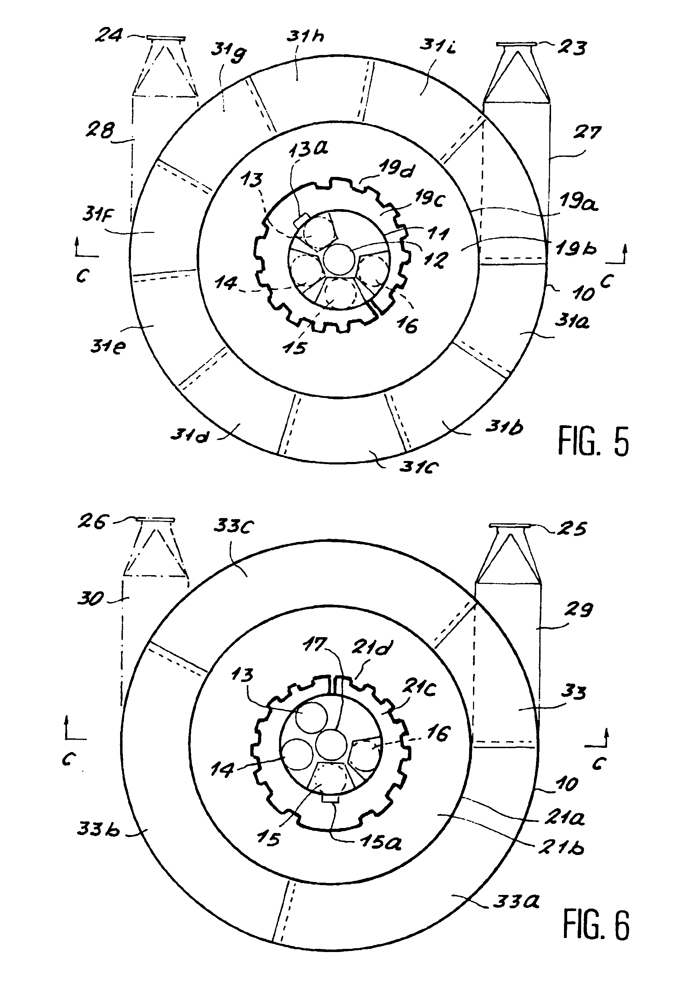

En se reportant aux figures 5 et 6, on voit que chacun de ces capots coniques 19c, 20c et 21c est décentré par rapport à l'axe de la colonne centrale 11 et cela de façon que sa partie la plus large soit au-dessus de la fenêtre 13a, 14a ou 15a correspondante. A sa base chaque capot 19c, 20c, 21 c comporte des ouvertures 19d, 20d, 21d pour laisser passer la pâte jusque vers la fenêtre 13a, 14a ou 15a.

Chacune des entrées circulaires 23 à 26 est associée à une boîte plate de section rectangulaire 27 à 30. Cette boîte a une largeur telle qu'elle occupe tout l'espace qui sépare la paroi de l'enceinte de la paroi verticale 19a, 20a, 21a du dispositif annulaire correspondant 19, 20, 21. Après chacune de ces boîtes 27 à 30, ledit espace est occupé par un dispositif à chicanes 31 à 34 qui correspond aux chicanes C des figures 1 à 3.

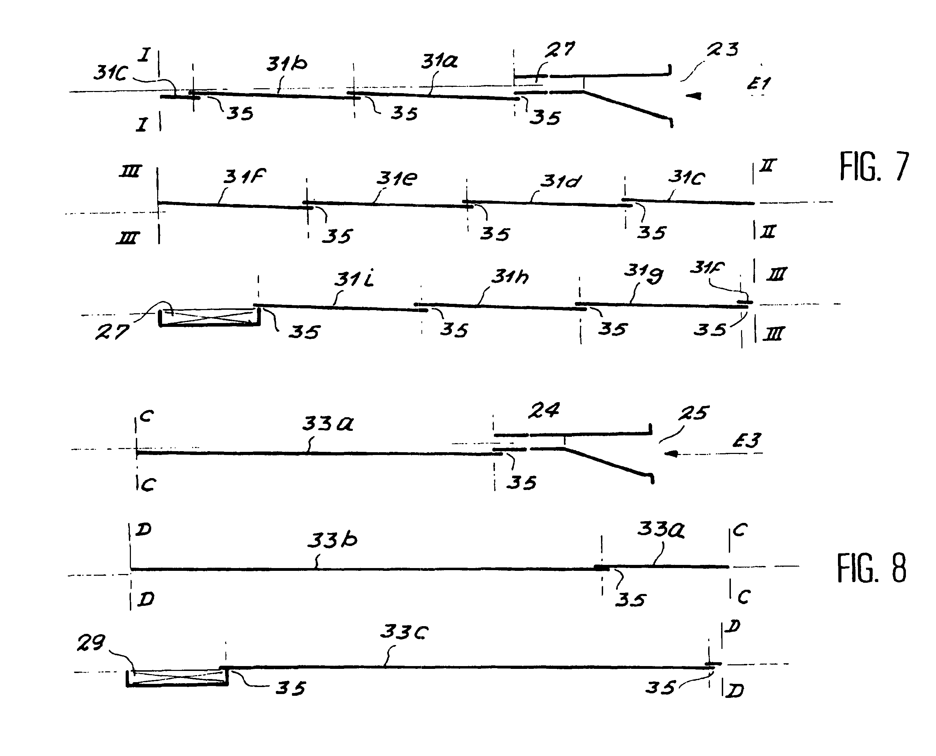

Les figures 5 et 7 illustrent le dispositif à chicanes 31 qui fait suite à la boîte 27 associée à l'entrée 27. Ce dispositif étant hélicoïdal est représenté sur la figure 5 comme étant circulaire, alors que la figure 7 est une vue développée où ce dispositif est donc représenté comme étant rectiligne. D'autre part, sa longueur est telle qu'il a été coupé en trois tronçons sur la figure 7.

Comme on peut le voir sur cette figure le dispositif 31 est constitué par une tôle plane qui s'enroule sur 360° autour du dispositif annulaire 19 en occupant tout l'espace compris entre ce dispositif annulaire et la paroi interne de l'enceinte 1, en s'élevant progressivement depuis le côté inférieur de la sortie de la boîte 27 (jusqu'à son côté supérieur). La tôle plane du dispositif 31 est coupée en 9 tronçons 31 a à 31 i qui se recouvrent partiellement en laissant entre-eux un espace 35. Les bulles arrivant de l'étage intérieur de recyclage passeront par les espaces 35.

Les figures 6 et 8 illustrent de la même manière le dispositif à chicanes 33 qui est analogue au dispositif 31 à la seule différence près qu'il n'est constitué que de 3 tronçons 33a à 33c.

La pâte à désencrer qui est introduite en 23 va être évacuée par la fenêtre 13a, descendre par le tube 13 pour être ré-introduite en 24, être évacuée par la fenêtre 14a, descendre par le tube 14 pour être ré-introduite en 25, évacuée par la fenêtre 15a, descendre par le tube 15, être ré-introduite en 26 pour être évacuée par la fenêtre 16a et le tube 16 et ré-introduite.

Les circuits de recyclage arrivant en 24, 25 et 26 peuvent être tous munis de moyens d'injection d'air comme cela est représenté à la figure 1, ou bien l'air n'est injecté que dans le circuit inférieur au niveau de l'entrée 26 comme cela est représenté à la figure 2.

Il y a donc d'une part un mouvement de haut en bas de la pâte à désencrer avec recyclages successifs et mouvement de bas en haut des bulles à travers la pâte recyclée en plusieurs étages; lesdites bulles passant d'un étage à l'autre à travers les chicanes 35.

Chaque dispositif annulaire 31 à 34 a pour effet d'une part de laisser passer les bulles venant de l'étage inférieur par les chicanes 35, mais en plus d'obliger la pâte à s'élever le long des parois 19a, 20a, 21 a pour redescendre ensuite dans l'élément en forme d'entonnoir 19b, 20b, 21 b au fond duquel se trouve la fenêtre d'évacuation 13a, 14a, 15a.

La mousse ainsi formée s'élève jusqu'à la partie haute de l'enceinte 1; puis, par les trous 18 elle passe dans l'entonnoir 17 et descend par le tube central 12 par laquelle elle est évacuée.

## Revendications

1. Procédé de désencrage de pâte à papier selon lequel la masse de pâte à papier à désencrer est mise en circulation dans une enceinte (1) de façon à se déplacer du haut vers le bas en étant traversée par des bulles d'air, introduites au moins dans la partie basse de l'enceinte (1) et se déplaçant de bas en haut
**dans lequel**
a) la masse de pâte à papier traverse successivement au moins deux étages (E₁, E₂, E₃, E₄) de désencrage en commençant par l'étage le plus haut et finissant par l'étage le plus bas, grâce à au moins un circuit de recyclage (2, 3, 4),
b) les bulles d'air sont introduites au moins dans l'étage le plus bas,
c) les introductions de pâte dans les étages se font avec ou sans addition d'air,
d) chaque étage comporte une zone de séparation entre les bulles et la pâte, dans laquelle la pâte se déplace vers le bas ; cette zone comportant une sortie de pâte (S₁, S₂, S₃, S₄) et un déflecteur empêchant les bulles de la traverser lorsque des bulles sont introduites plus bas que ledit étage,
e) des moyens (C) entre deux étages permettant aux bulles séparées de la pâte dans l'étage le plus bas d'entrer dans l'étage situé au-dessus **pour être remélangées à la pâte****,** tout en empêchant la pâte se trouvant dans ledit étage situé au-dessus d'aller se mélanger à la pâte se trouvant en dessous.

2. Procédé selon la revendication 1 selon lequel des bulles sont créées dans un circuit recyclé sur lui-même, situé sous l'étage de recyclage le plus bas.

3. Procédé selon la revendication 2 selon lequel on introduit dans ledit circuit recyclé sur lui-même et situé sous l'étage de recyclage le plus bas la quantité d'eau nécessaire pour compenser l'eau évacuée avec la mousse.

4. Procédé selon la revendication 1 selon lequel on dispose une pluralité de circuits de recyclage (2, 3, 4), distincts les uns des autres, chaque circuit de recyclage (2, 3, 4) comportant une entrée (E) dans l'enceinte (1), une sortie (S) qui lui correspond et une pompe de circulation (P), les entrées (E) étant situées les unes au-dessus des autres en partant de la zone supérieure de l'enceinte (1), chaque entrée dans l'enceinte d'un circuit de recyclage se faisant à un niveau inférieur à celui de l'entrée du circuit précédent.

5. Procédé selon les revendications 2 et 4 selon lequel les bulles sont créées dans un circuit recyclé sur lui-même, situé à la base de la masse de pâte à papier à désencrer, les autres recyclages de la pâte se faisant au choix avec ou sans introduction d'air.

6. Procédé selon la revendication 1 dans lequel des bulles sont créées à la base de la masse de pâte à papier à désencrer par insufflation d'air comprimé.

7. Procédé selon la revendication 6 dans lequel on introduit la quantité de liquide pour compenser l'eau évacuée avec la mousse à un niveau situé au-dessus de la zone où l'air est insufflé.

8. Procédé selon les revendications 3 à 7 selon lequel le liquide introduit en complément est additionné d'un additif chimique favorisant la formation des bulles et l'adhérence des particules d'encre aux parois desdites bulles.

9. Procédé selon la revendication 1 selon lequel les bulles sont introduites sous forme de mousse par un orifice situé en dessous de la pâte à papier ; les différentes étapes de recyclage de la pâte se faisant éventuellement sans introduction d'air ; la mousse comportant éventuellement des produits chimiques favorisant la formation de la mousse et l'adhérence des particules d'encre aux parois des bulles de la mousse.

10. Procédé selon les revendications 1 à 9 selon lequel la pâte à papier à désencrer est additionnée d'un additif chimique favorisant l'élimination des particules d'encre.

11. modifiée) - Appareil pour la mise en oeuvre du procédé, selon les revendications 1 à 10, comportant : une enceinte (1) munie d'une pluralité d'orifices d'entrée (E₁, E₂, E₃, E₄ etc...), d'une pluralité d'orifices de sortie (S₁, S₂, S₃, S₄, etc..) correspondant auxdits orifices d'entrée ; ainsi qu'une pluralité de circuits de recyclage (2, 3, 4) munis chacun d'une pompe (P₁, P₂, P₃), au moins un de ces circuits comportant un injecteur (I₃) d'air; l'orifice d'entrée le plus haut (E₁) étant celui par lequel arrive la pâte à traiter, l'orifice de sortie le plus bas (S₄) étant celui par lequel la pâte est évacuée de l'enceinte (1) et chaque orifice de sortie des étages successifs de recyclage étant relié à l'orifice d'entrée qui est situé en dessous de l'orifice d'entrée précédent, **caractérisé par le fait qu'il comporte des moyens (C) entre deux étages permettant aux bulles séparées de la** pâte dans l'étage le plus bas d'entrer dans l'étage situé au-dessus pour être remélangées à la pâte, et qui empêchent la pâte se trouvant dans ledit étage situé au-dessus d'aller se mélanger à la pâte se trouvant en dessous.

12. modifiée) - Appareil pour la mise en oeuvre du procédé selon les revendications 1 à 10, comprenant une enceinte (1) munie d'une pluralité d'orifices d'entrée (E₁, E₂, E₃, E₄ etc...), d'une pluralité d'orifices de sorties (S₁, S₂, S₃, S₄ etc...) correspondant auxdits orifices d'entrée ; ainsi qu'une pluralité de circuits de recyclage (2, 3, 4 ...) munis chacun d'une pompe (P₁, P₂, P₃ ...) ; l'orifice situé le plus haut (E₁) étant celui par lequel arrive la pâte à traiter et l'orifice de sortie (S₄) situé le plus bas étant celui par lequel la pâte est évacuée hors de l'enceinte; chaque orifice de sortie des étages successifs de recyclage étant relié par des conduites (2, 3, 4, ...) à l'orifice d'entrée qui est situé immédiatement en dessous de l'orifice d'entrée précédent ; **caractérisé par le fait qu'**aucun de ces circuits de recyclage ne comporte d'injecteur d'air ; l'enceinte (1) étant munie en plus à sa base d'un circuit de recyclage d'eau ou de liquide approprié comportant une sortie (S₅) reliée par une canalisation (5), munie d'un injecteur d'air (I₅), à un orifice d'entrée (E₅) situé à un niveau inférieur au plus bas (E₄) des circuits de recyclage de la pâte et au-dessus de (S₅), de telle sorte que les bulles ne sont générées que dans le circuit de recyclage situé au-dessous du ou des circuits de recyclage de la pâte, et **par le fait qu'**il comporte des moyens (C) entre deux étages permettant aux bulles séparées de la pâte dans l'étage le plus bas d'entrer dans l'étage situé au-dessus pour être remélangées à la pâte, et qui empêchent la pâte se trouvant dans ledit étage situé au-dessus d'aller se mélanger à la pâte se trouvant en dessous.

13. Appareil selon la revendication 12 dans lequel le circuit inférieur de recyclage de liquide dans lequel sont créées les bulles est remplacé par un orifice (E₅) par lequel est introduite directement la mousse.

14. Appareil selon la revendication 12 dans lequel le circuit inférieur de recyclage de liquide est remplacé par un orifice (E₅) par lequel est introduit de l'air comprimé, l'enceinte (1) comportant une grille (G) située au-dessus dudit orifice (E₅) de façon à former des bulles qui se répartissent dans toute la masse de pâte à papier.

15. Appareil selon la revendication 14 comportant une conduite d'arrivée d'eau (El) débouchant dans l'enceinte (1) à un niveau situé au-dessus de la grille (G) de répartition des bulles.

16. Appareil selon les revendications 11 à 15 **caractérisé par le fait que**, entre les entrées de la pâte (E₁, E₂, E₃, E₄ ...) et les sorties de pâte correspondantes (S₁, S₂, S₃, S₄ ...), sont disposés des déflecteurs (D₁, D₂, D₃, D₄ ...).

17. Appareil selon la revendication 16 dans lequel chaque déflecteur (D) comporte une partie verticale cylindrique faisant face à l'orifice d'entrée (E) et une partie oblique conique conduisant à l'orifice de sortie (S) correspondant de façon que le flux allant de l'un à l'autre s'élève pour passer au-dessus de la partie verticale pour descendre ensuite vers l'orifice de sortie, les bulles passant d'un étage à l'autre dans l'espace ménagé entre les parties verticales des déflecteurs (D) et la paroi interne de l'enceinte (A).

18. Appareil selon l'une quelconque des revendications 11 à 17, dans lequel des chicanes (C) sont disposées dans ledit espace situé entre la paroi verticale des déflecteurs (D) et la paroi interne de l'enceinte (1).

19. Appareil selon la revendication 18 dans lequel les chicanes (C) sont constituées par une paroi plane, perpendiculaire à l'axe vertical de l'enceinte, qui s'enroule en spirale entre la paroi interne de l'enceinte (1) et la paroi verticale du déflecteur correspondant (D), cette paroi s'élevant depuis la partie basse de chaque orifice d'entrée (E) jusqu'à sa partie haute en plusieurs tronçons disposés en gradins, lesdits tronçons étant décalés en hauteur de façon à ménager des fentes (35) par lesquelles passent les bulles.

20. Appareil selon les revendications 11 à 19 dans lequel l'enceinte (1) est cylindrique, les déflecteurs (D) sont constitués par des dispositifs annulaires (19, 20, 21, 22) qui comportent une paroi verticale cylindrique (19a, 20a, 21a, 22a) et un fond (19b, 20b, 21b, 22b) traversé par une colonne centrale tubulaire (11).

21. Appareil selon la revendication 20 dans lequel, à l'exception du dispositif annulaire inférieur (22) qui a un fond (22b) plat, les autres dispositifs annulaires ont un fond conique (19b, 20b, 21b) en forme d'entonnoir.

22. Appareil selon la revendication 21 dans lequel à la base du fond de chaque dispositif annulaire (19, 20, 21, 22) est disposée une fenêtre (13a, 14a, 15a, 16a) ménagée dans la colonne centrale (11) et communiquant avec un tube d'évacuation (13, 14, 15, 16) placé à l'intérieur de ladite colonne.

23. Appareil selon la revendication 22 dans lequel chaque fenêtre d'évacuation (13a, 14a, 15a, 16a) est coiffée par un capot (19c, 20c, 21c, 22c) conique, muni d'ouvertures (19d, 20d, 21d, 22d).

24. Appareil selon l'une quelconque des revendications 20 à 23 dans lequel les tubes (13, 14, 15, 16) par lesquels la pâte est évacuée de l'enceinte (1) pour être recyclée sont disposés à l'intérieur de la colonne centrale (11).

## Patentansprüche

1. Verfahren zum Deinken von Papierbrei, bei dem die Masse aus zu deinkendem Papierbrei in einem Raum (1) so in Umlauf gebracht wird, daß sie sich von oben nach unten bewegt und dabei von Luftblasen durchströmt wird, die zumindest im unteren Teil des Raumes (1) eingeführt werden und sich von unten nach oben bewegen, wobei
a) die Masse aus Papierbrei mittels eines Rückfuhrkreislaufs (2, 3, 4) nacheinander mindestens zwei Deinking-Etagen (E₁, E₂, E₃, E₄), und zwar beginnend bei der obersten Etage und endend an der untersten Etage, durchläuft,
b) die Luftblasen mindestens an der untersten Etage eingeführt werden,
c) die Einführungen von Brei in die Etagen mit oder ohne Luftzufuhr erfolgen,
d) jede Etage einen Trennbereich zwischen den Blasen und dem Brei umfaßt, in dem sich der Brei nach unten bewegt, wobei dieser Bereich einen Breiauslaß (S₁, S₂, S₃, S₄) und einen Deflektor (D₁, D₂, D₃, D₄) umfaßt, der die Blasen daran hindert, diesen Bereich zu durchströmen, wenn Blasen unterhalb dieser Etage eingeführt werden,
e) Mittel (C) zwischen zwei Etagen vorgesehen sind, die es zulassen, daß die in der untersten Etage von dem Brei getrennten Blasen in die darüber liegende Etage einströmen, um aufneu mit dem Brei vermischt zu werden, und gleichzeitig verhindern, daß der sich in dieser darüber liegenden Etage befindende Brei sich mit dem Brei mischt, der sich darunter befindet.

2. Verfahren nach Anspruch 1, bei dem Blasen in einem auf sich selbst zurückgeführten Kreislauf erzeugt werden, der unterhalb der untersten Rückfiihrungsetage liegt.

3. Verfahren nach Anspruch 2, bei dem man in den auf sich selbst zurückgeführten und unter der untersten Rückführungsetage gelegenen Kreislauf die Wassermenge einführt, die zum Ausgleich des mit dem Schaum abgezogenen Wassers nötig ist.

4. Verfahren nach Anspruch 1, bei dem man eine Vielzahl voneinander verschiedener Rückführungskreisläufe (2, 3, 4) vorsieht, wobei jeder Rückführungskreislauf (2, 3, 4) einen Einlaß (E) in den Raum (1), einen diesem entsprechenden Auslaß (S) und eine Umlaufpumpe (P) umfaßt, wobei die Einlasse (E), ausgehend vom oberen Bereich des Raumes (1), übereinander angeordnet sind und jeder Einlaß in den Raum eines Rückführungskreislaufs auf einem Niveau erfolgt, das unter dem des Einlasses des vorhergehenden Kreislaufs liegt.

5. Verfahren nach den Ansprüchen 2 und 4, bei dem die Blasen in einem auf sich selbst zurückgeführten Kreislauf erzeugt werden, der sich am Boden der Masse aus zu deinkendem Papierbrei befindet, wobei die anderen Rückführungen des Breis wahlweise mit oder ohne Einführung von Luft erfolgen.

6. Verfahren nach Anspruch 1, bei dem Blasen am Boden der Masse aus zu deinkendem Papierbrei durch Einblasen von Druckluft erzeugt werden.

7. Verfahren nach Anspruch 6, bei dem man die Flüssigkeitsmenge zum Ausgleichen des mit dem Schaum abgezogenen Wassers auf einem Niveau einführt, das oberhalb des Bereiches liegt, in dem die Luft eingeblasen wird.

8. Verfahren nach den Ansprüchen 3 bis 7, bei dem der zusätzlich eingeführten Flüssigkeit ein chemisches Additiv zugesetzt wird, das die Blasenbildung und das Anhaften der Tinteteilchen an den Hüllen der Blasen begünstigt.

9. Verfahren nach Anspruch 1, bei dem die Blasen in Form eines Schaums über eine unterhalb des Papierbreis gelegene Öffnung eingeführt werden ; die unterschiedlichen Schritte der Rückführung des Breis gegebenenfalls ohne Einführung von Luft erfolgen und der Schaum gegebenenfalls chemische Produkte umfaßt, welche die Schaumbildung und das Anhaften der Tinteteilchen an den Hüllen der Schaumblasen begünstigen.

10. Verfahren nach den Ansprüchen 1 bis 9, bei dem der zu deinkende Papierbrei mit einem chemischen Additiv versetzt wird, das die Beseitigung der Tinteteilchen begünstigt.

11. Vorrichtung zur Durchführung des Verfahrens nach den Ansprüchen 1 bis 10, umfassend: einen Raum (1), der mit einer Vielzahl von Einlaßöffnungen (E₁, E₂, E₃, E₄, usw...), einer Vielzahl von den Einlaßöffnungen entsprechenden Auslaßöffnungen (S₁, S₂, S₃, S₄, usw...) sowie mit einer Vielzahl von Rückführungskreisläufen (2, 3, 4) ausgestattet ist, die jeweils eine Pumpe (P₁, P₂, P₃) aufweisen, wobei mindestens einer dieser Kreisläufe einen Luftinjektor (I₃) umfaßt und außerdem die oberste Einlaßöffnung (E₁) diejenige ist, durch welche der zu behandelnde Brei zugeführt wird, während die unterste Auslaßöffnung (S₄) diejenige ist, durch welche der Brei aus dem Raum (1) abgezogen wird, und wobei jede Auslaßöffnung der aufeinanderfolgenden Rückführungsetagen mit der Einlaßöffnung verbunden ist, die unterhalb der vorhergehenden Einlassöffnung angebracht ist, **dadurch gekennzeichnet, daß** sie Mittel (C) zwischen zwei Etagen umfaßt, die es zulassen, daß die in der untersten Etage von dem Brei getrennten Blasen in die darüber liegende Etage einströmen, um aufneu mit dem Brei vermischt zu werden, und die verhindern, daß der sich in dieser darüber liegenden Etage befindende Brei sich mit dem Brei mischt, der sich darunter befindet.

12. Vorrichtung zur Durchführung des Verfahrens nach den Ansprüchen 1 bis 10, umfassend einen Raum (1), der mit einer Vielzahl von Einlaßöffnungen (E₁, E₂, E₃, E₄, usw...), einer Vielzahl von Auslaßöffnungen (S₁, S₂, S₃, S₄, usw...), die den Einlaßöffnungen entsprechen, sowie mit einer Vielzahl von Rückführungskreisläufen (2, 3, 4, ...) versehen ist, die jeweils eine Pumpe (P₁, P₂, P₃, ...) aufweisen, wobei die ganz oben gelegene Öffnung (E₁) diejenige ist, durch die der zu behandelnde Brei einströmt, und die ganz unten liegende Auslaßöffnung (S₄) diejenige ist, durch die der Brei aus dem Raum abgezogen wird, und wobei jede Auslaßöffnung der aufeinanderfolgenden Rückführungsetagen über Leitungen (2, 3, 4, ...) mit der Einlaßöffnung verbunden ist, die unmittelbar unterhalb der vorhergehenden Einlassöffnung liegt, **dadurch gekennzeichnet, daß** keiner dieser Rückführungskreisläufe einen Luftinjektor umfaßt, wobei ferner der Raum (1) zudem an seinem Boden mit einem geeigneten Wasser- oder Flüssigkeits-Rückführkreislauf versehen ist, der einen Auslaß (S₅) umfaßt, der über eine mit einem Luftinjektor (I₅) versehene Leitung (5) mit einer Einlaßöffnung (E₅) verbunden ist, die auf einem Niveau unterhalb des untersten (E₄) der Kreisläufe zur Rückführung des Breis und oberhalb (S₅) so angeordnet ist, daß die Blasen nur in dem Rückführungskreislauf erzeugt werden, der unterhalb des oder der Kreisläufe zur Rückführung des Breis liegt, und daß sie Mittel (C) zwischen zwei Etagen umfaßt, die es zulassen, daß die in der untersten Etage von dem Brei getrennten Blasen in die darüber liegende Etage einströmen, um aufneu mit dem Brei vermischt zu werden, und gleichzeitig verhindern, daß der sich in dieser darüber liegenden Etage befindende Brei sich mit dem Brei mischt, der sich darunter befindet.

13. Vorrichtung nach Anspruch 12, bei der der untere Kreislauf zur Rückführung von Flüssigkeit, in dem die Blasen erzeugt werden, durch eine Öffnung (E₅) ersetzt ist, über die der Schaum direkt eingeführt wird.

14. Vorrichtung nach Anspruch 12, bei der der untere Flüssigkeits-Rückführungskreislauf durch eine Öffnung (E₅) ersetzt ist, über die Druckluft eingeführt wird, wobei der Raum (1) ein Gitter (G) umfaßt, das oberhalb der Öffnung (E₅) so angeordnet ist, dass Blasen gebildet werden, die sich in der gesamten Masse aus Papierbrei verteilen.

15. Vorrichtung nach Anspruch 14, mit einer Wasserzuführleitung (E1), die in den Raum (1) auf einem Niveau einmündet, das oberhalb des Gitters (G) zur Verteilung der Blasen liegt.

16. Vorrichtung nach den Ansprüchen 11 bis 15, **dadurch gekennzeichnet, daß** zwischen den Einlassen für den Brei (E₁, E₂, E₃, E₄, ...) und den entsprechenden Breiauslässen (S₁, S₂, S₃, S₄, ...) Deflektoren (D₁, D₂, D₃, D₄, ...) angebracht sind.

17. Vorrichtung nach Anspruch 16, bei der jeder Deflektor (D) ein vertikales, zylindrisches Teil, das der Einlaßöffnung (E) gegenüberliegt, und ein schräges, konisch zulaufendes Teil umfaßt, das zur entsprechenden Auslaßöffnung (S) führt, derart, daß der von der einen Öffnung zur anderen strömende Fluß ansteigt, um über das vertikale Teil hinweg zu fließen, und danach zur Auslaßöffnung hin abfällt, wobei die Blasen von einer Etage zur anderen in dem Raum strömen, der zwischen den vertikalen Teilen der Deflektoren (D) und der Innenwand des Raumes (A) ausgebildet ist.

18. Vorrichtung nach irgendeinem der Ansprüche 17, bei der Schikanen (C) in dem Raum angeordnet sind, der zwischen der vertikalen Wand der Deflektoren (D) und der Innenwand des Raumes (1) liegt.

19. Vorrichtung nach Anspruch 18, bei der die Schikanen (C) aus einer ebenen Wand bestehen, die senkrecht zur vertikalen Achse des Raumes und spiralenförmig zwischen der Innenwand des Raumes (1) und der vertikalen Wand des entsprechenden Deflektors (D) verläuft, wobei diese Wand vom unteren Teil jeder Einlaßöffnung (E) bis zu deren oberem Teil in mehreren etagenförmig angeordneten Abschnitten ansteigt und diese Abschnitte in der Höhe so versetzt sind, daß sie Schlitze (35) ausbilden, durch die die Blasen hindurchtreten.

20. Vorrichtung nach den Ansprüchen 11 bis 19, bei der der Raum (1) zylinderförmig ausgebildet ist, die Deflektoren D von ringförmigen Einrichtungen (19, 20, 21, 22) gebildet werden, die eine vertikale, zylindrische Wand (19a, 20a, 21a, 22a) und einen Boden (19b, 20b, 21b, 22b) umfassen, durch den ein zentraler, röhrenförmiger Schaft (11) verläuft.

21. Vorrichtung nach Anspruch 20, bei der, mit Ausnahme der unteren ringförmigen Einrichtung (22), die einen flachen Boden (22b) aufweist, die anderen ringförmigen Einrichtungen mit einem konisch zulaufenden, trichterförmigen Boden (19b, 20b, 21b) versehen sind.

22. Vorrichtung nach Anspruch 21, bei der an der Basis des Bodens jeder ringförmigen Einrichtung (19, 20, 21, 22) ein Fenster (13a, 14a, 15a, 16a) angeordnet ist, das in dem zentralen Schaft (11) ausgebildet ist und in Verbindung mit einem Abzugsrohr (13, 14, 15, 16) steht, das im Inneren des Schaftes angebracht ist.

23. Vorrichtung nach Anspruch 22, bei der jedes Abzugsfenster (13a, 14a, 15a, 16a) mit einer konisch zulaufenden Haube (19c, 20c, 21c, 22c) bedeckt ist, die mit Öffnungen (19d, 20d, 21d, 22d) versehen ist.

24. Vorrichtung nach irgendeinem einem der Ansprüche 20 bis 23, bei der die Rohre (13, 14, 15, 16), durch die der Brei aus dem Raum (1) abgezogen wird, um zurückgeführt zu werden, im Inneren des zentralen Schaftes (11) angeordnet sind.

## Claims

1. Method for de-inking paper pulp, according to which the mass of paper pulp to be de-inked is circulated in an enclosure (1), such as to be displaced from the top downwards, whilst being permeated by air bubbles, which are introduced at least into the lower part of the enclosure (1), and are displaced from the lower part of the enclosure (1) upwards,
wherein :
a) the mass of paper pulp passes in succession through at least two de-inking stages (E₁, E₂, E₃, E₄), starting with the uppermost stage and finishing with the lowermost stage, by means of at least one recycling circuit (2,3,4),
b) the air bubbles are introduced at least into the lowermost stage,
c) the pulp is introduced into the stages with or without the addition of air,
d) each stage comprises an area of separation between the bubbles and the pulp, in which the pulp is displaced downwards ; this area comprising a pulp output (S₁, S₂, S₃, S₄) and a deflector, which prevents the bubbles from passing through it when bubbles are introduced lower than said stage ;
e) means (C) between two stages, which allow the bubbles which are separated from the pulp in the lowermost stage to enter the stage which is arranged above in order to be re-admixed to the pulp, whilst preventing the pulp located in said stage which is arranged above from being mixed with the pulp which is located below.

2. Method according to claim 1, in which bubbles are created in a circuit which is recycled around itself, and is arranged beneath the lowermost recycling stage.

3. Method according to claim 2, in which the quantity of water which is necessary in order to compensate for the water discharged together with the foam is introduced into said circuit which is recycled around itself, and is located beneath the lowermost recycling stage.

4. Method according to claim 1, in which there is provided a plurality of recycling circuits (2, 3, 4), which are separate from one another, each recycling circuit (2, 3, 4) comprising an intake (E) into the enclosure (1), a corresponding output (S), and a circulation pump (P), the intakes (E) being located one above another, starting with the upper area of the enclosure (1), each intake into the enclosure of a recycling circuit taking place at a level which is lower than that of the intake of the previous circuit.

5. Method according to claims 2 and 4, in which the bubbles are created in a circuit which is recycled around itself, and is located at the base of the mass of paper pulp to be de-inked, the other recyclings of the pulp being carried out with or without the introduction of air, as required.

6. Method according to claim 1, in which bubbles are created at the base of the mass of paper pulp to be de-inked, by means of insufflation of compressed air.

7. Method according to claim 6, in which there is introduced the quantity of liquid to compensate for the water discharged together with the foam, at a level which is located above the area where the air is insufflated.

8. Method according to claims 3 to 7, in which the fluid which is introduced in addition is provided with a chemical additive, which assists the formation of the bubbles, and the adhesion of the particles of ink to the walls of the said bubbles.

9. Method according to claim 1, in which the bubbles are introduced in the form of foam, via an aperture which is located below the paper pulp ; the various stages of recycling of the pulp being eventually carried out without the introduction of air ; the foam containing eventually chemical products which assist the formation of the foam, and the adhesion of the particles of ink to the walls of the bubbles of the foam.

10. Method according to claims 1 to 9, in which the paper pulp to be de-inked is provided with a chemical additive, which assists elimination of the particles of ink.

11. Device for the implementation of the method according to claims 1 to 10, comprising: an enclosure (1), which is provided with a plurality of intake apertures (E₁, E₂, E₃, E₄, etc...), a plurality of outlet apertures (S₁, S₂, S₃, S₄, etc...) corresponding to said intake apertures ; as well as a plurality of recycling circuits (2, 3, 4), each of which is provided with a pump (P₁, P₂, P₃), at least one of these circuits comprising an air injector (l₃) ; the uppermost intake aperture (E₁) being the one via which the pulp to be processed is admitted, the lowermost output aperture (S₄) being the one via which the pulp is discharged from the enclosure (1), and each output aperture of the successive recycling stages being connected to the intake aperture which is located below the preceding intake aperture, **characterised in that** it includes means (C) between two stages, which allow the bubbles which are separated from the pulp in the lowest stage to enter the stage which is arranged above in order to be re-admixed to the pulp, and which prevent the pulp located in said stage which is arranged above from being mixed with the pulp which is located below.

12. Device for the implementation of the method according to claims 1 to 10, comprising an enclosure (1), which is provided with a plurality of intake apertures (E₁, E₂, E₃, E₄, etc...), a plurality of outlet apertures (S₁, S₂, S₃, S₄, etc...) corresponding to said intake apertures ; as well as a plurality of recycling circuits (2, 3, 4 ...), each of which is provided with a pump (P₁, P₂, P₃, ...), the uppermost aperture (E₁) being the one via which the pulp to be processed is admitted, and the lowermost output aperture (S₄) being the one via which the pulp is discharged from the enclosure; each output aperture of the successive recycling stages being connected by ducts (2, 3, 4, ...) to the intake aperture which is arranged immediately below the preceding intake aperture; **characterised in that** none of the recycling circuits includes an air injector ; the enclosure (1) being additionally provided at its base with a circuit for recycling water or an appropriate liquid comprising an output (S₅), which is connected by piping (5) provided with an air injector (I₅), to an intake aperture (E₅) which is disposed at a lower level than the lowest part (E₄) of the circuits for recycling the pulp, and above (S₅), such that the bubbles are generated only in the recycling circuit which is located below the circuit(s) for recycling of the pulp, and **in that** it includes means (C) between two stages, which allow the bubbles which are separated from the pulp in the lowermost stage to enter the stage which is arranged above in order to be re-admixed to the pulp, and which prevent the pulp located in said stage which is arranged above from being mixed with the pulp which is located below.

13. Device according to claim 12, in which the lower circuit for recycling liquid, in which the bubbles are created, is replaced by an aperture (E₅), via which the foam is introduced directly.

14. Device according to claim 12, in which the lower circuit for recycling liquid is replaced by an aperture (E₅), via which compressed air is introduced, the enclosure (1) comprising a grid (G) which is located above said aperture (E₅), such as to form bubbles which are distributed throughout the mass of paper pulp.

15. Device according to claim 14, comprising a water intake duct (E1), which opens into the enclosure (1), at a level which is located above the grid (G) for distributing the bubbles.

16. Device according to claims 11 to 15, **characterised in that** deflectors (D₁, D₂, D₃, D₄, ...) are arranged between the intakes (E₁, E₂, E₃, E₄, ...) for the pulp and the corresponding outputs (S₁, S₂, S₃, S₄, ...) for the pulp.

17. Device according to claim 16, in which each deflector (D) comprises a vertical cylindrical part, which faces the intake aperture (E), and a conical oblique part, which leads to the corresponding output aperture (S), such that the flow which goes from one to the other rises, such as to pass above the vertical part, and then descend towards the output aperture, the bubbles passing from one stage to the other in the space which is provided between the vertical parts of the deflectors (D) and the inner wall of the enclosure (A).

18. Device according to any of claims 11 to 17, in which baffles (C) are arranged in said space between the vertical wall of the deflectors (D) and the inner wall of the enclosure (1).

19. Device according to claim 18, in which the baffles (C) consist of a flat wall, which is perpendicular to the vertical axis of the enclosure, which is coiled in a spiral between the inner wall of the enclosure (1) and the vertical wall of the corresponding deflector (D), this wall rising from the lower part of each intake aperture (E) as far as its upper part, in several sections which are arranged in steps, the height of said sections being offset such as to provide slots (35) through which the bubbles pass.

20. Device according to claims 11 to 19, in which the enclosure (1) is cylindrical, the deflectors (D) consist of annular devices (19, 20, 21, 22), which comprise a vertical cylindrical wall (19a, 20a, 21a, 22a), and a bottom (19b, 20b, 21b, 22b) through which a central tubular column (11) passes.

21. Device according to claim 20, in which, with the exception of the lower annular device (22) which has a flat bottom (22b), the other annular devices have a conical bottom (19b, 20b, 21b) in the form of a funnel.

22. Device according to claim 21, in which at the base of the bottom of each annular device (19, 20, 21, 22) is arranged a window (13a, 14a, 15a, 16a), which is provided in the central column (11), and communicates with a discharge tube (13, 14, 15, 16), which is placed inside said column.

23. Device according to claim 22, in which each discharge window (13a, 14a, 15a, 16a) is surmounted by a conical cap (19c, 20c, 21c, 22c), which is provided with apertures (19d, 20d, 21d, 22d).

24. Device according to any one of claims 20 to 23, in which the tubes (13, 14, 15, 16) via which the pulp is discharged from the enclosure (1) in order to be recycled are arranged inside the central column (11).
